# EUROPÄISCHE PATENTANMELDUNG

(11) **EP 2 104 221 A1**
(43) Veröffentlichungstag der Anmeldung: **23.09.2009**
(21) Anmeldenummer: 08005423.2
(22) Anmeldetag: 22.03.2008
(51) Int. Cl.: H02P 1/38, H02P 25/18, H02P 25/20, H02K 3/28, H02K 17/14, H02K 19/12

(54) **Verfahren zum Ansteuern eines mehrphasigen in Sternschaltung betriebenen Elektromotors**

(71) Anmelder: Grundfos Management A/S, 8850 Bjerringbro (DK)
(72) Erfinder: Aarestrup, Jan Caroe, 8850 Bjerringbro (DK)
(74) Vertreter: Vollmann, Heiko

(57) **Zusammenfassung**

Das Verfahren dient zum Ansteuern eines mehrphasigen in Sternschaltung betriebenen Elektromotors. Es sieht vor, mindestens einen Wicklungsteil einer Phase des Motors leitend zu überbrücken und den überbrückten Wicklungsteil elektrisch zu trennen, um auf diese Weise den elektrisch wirksamen, verbleibenden Wicklungen eine höhere Spannung zuzuführen und damit den Stromfluss und somit das Drehmoment zu erhöhen. (Fig. 1)

## Beschreibung

Die Erfindung betrifft ein Verfahren zum Ansteuern eines mehrphasigen in Sternschaltung betriebenen Elektromotors sowie einen solchen Elektromotor zur Ausführung des vorgenannten Verfahrens.

Moderne Elektromotoren können heutzutage durch elektronische Steuerungen weitgehend unabhängig von der Netzfrequenz angesteuert werden. Allerdings bedingt die Umrichterelektronik selbst unter Einsatz hoch integrierter elektronischer Schaltkreise Kosten, die häufig in der Größenordnung des Motors liegen. Man ist daher bemüht, insbesondere für Motoren kleiner und mittlerer Leistung von beispielsweise bis zu 7.500 W Ansteuerungen zu schaffen, die kostengünstig herstellbar sind und die den Motor mit hoher Effektivität, d. h. mit hohem Wirkungsgrad betreiben. Hierzu eignen sich aufgrund ihres hohen Wirkungsgrades insbesondere Permanentmagnetmotoren, die mit einer aus Triacs als Leistungsschalter aufgebauten Ansteuerelektronik versehen sind. Solche Triacs, welche den einzelnen Motorwicklungen als Schalter zugeordnet sind, haben den Vorteil, dass diese zwar kostengünstig herstellbar sind, jedoch den Nachteil, dass es sich bei üblicher Ansteuerung um selbst haltende Schalter handelt, d. h. die nach dem Einschalten erst dann wieder sperren, wenn der durch den Schalter fließende Strom 0 (Null) wird bzw. seine Richtung ändert.

Es zählt weiter zum Stand der Technik, einen dreiphasigen bürstenlosen Elektromotor mittels eines Direktumrichters (Cyclokonverter) anzusteuern, der den Wechselstrom des Versorgungsnetzes so umrichtet, dass sich eine Wellenform höherer oder niedrigerer Frequenz ergibt. Mittels einer Phasenanschnittssteuerung kann darüber hinaus die Drehzahl unter die Synchrondrehzahl abgesenkt werden.

Auch sind sogenannte Softstarter bekannt, bei denen ein bürstenloser dreiphasiger Elektromotor mittels Triacs angefahren wird. Solche Softstarter werden in Verbindung mit Dreiphasenmotoren eingesetzt, an deren Wicklungen die Netzspannung anliegt, die durch Phasenanschnittssteuerung abgesenkt werden kann.

Es zählt also zum Stand der Technik, einen wechselstromversorgten Elektromotor mittels Triacs so anzusteuern, dass dieser nicht nur synchron, sondern auch übersynchron oder untersynchron gefahren werden kann.

Doch reicht die Phasenanschnittssteuerung als solche nicht aus, um ein Anfahren mit hohem Moment oder kurzzeitig ein erhöhtes Drehmoment des Motors zu erreichen. Aus EP 1 443 635 A1 ist ein Verfahren zum Steuern des Zündwinkels eines einphasig wechselstromversorgten Elektromotors bekannt, welches ein erhöhtes Moment beim Anfahren des Motors sowie einen ruhigen Lauf bei hochgefahrenem Motor gewährleistet und mittels Triacs arbeitet, welche Haupt- und Hilfswicklung entsprechend bestromen. Dieses Verfahren arbeitet mit einer wenig aufwändigen elektronischen Steuerung und kostengünstigen Triacs und ermöglicht zudem, die Drehzahl des Motors in recht weiten Bereichen zu steuern, und das bei einem hohen Wirkungsgrad.

Vor diesem Hintergrund liegt der Erfindung die Aufgabe zugrunde, ein Verfahren zum Ansteuern eines mehrphasigen in Sternschaltung betriebenen Elektromotors zu schaffen, mit dem ein hohes Anfahrmoment oder auch ein erhöhtes Moment während des Motorbetriebs erzielt werden kann, das kostengünstig und effizient umsetzbar ist. Darüber hinaus soll ein entsprechender Elektromotor zur Ausführung dieses Verfahrens bereitgestellt werden.

Der verfahrensmäßige Teil dieser Aufgabe wird durch die in Anspruch 1 angegebenen Merkmale gelöst, ein entsprechender Elektromotor ist durch die Merkmale des Anspruchs 10 definiert. Vorteilhafte Ausgestaltungen der Erfindung sind in den Unteransprüchen sowie der nachfolgenden Beschreibung angegeben.

Das erfindungsgemäße Verfahren zum Ansteuern eines mehrphasigen in Sternschaltung betriebenen Elektromotors sieht vor, mindestens einen Wicklungsteil einer Phase des Motors leitend zu überbrücken und den überbrückten Wicklungsteil elektrisch vom übrigen Motor zu trennen. Das erfindungsgemäße Verfahren ist insbesondere für wechselstromversorgte, bürstenlose Permanentmagnetmotoren, also typischerweise für elektronisch kommutierte Mehrphasengleichstrommotoren aber auch für Asynchronmotoren vorteilhaft einsetzbar.

Grundgedanke des erfindungsgemäßen Verfahrens ist es, durch leitende Überbrückung mindestens eines Wicklungsteils oder einer Wicklung einer Phase des Motors der anderen oder den übrigen Phasen des Motors eine höhere Spannung und damit auch einen höheren Strom und somit größere elektrische Leistung zuzuführen, die der Motor dann in ein erhöhtes Drehmoment umsetzt. Dabei kann bei einem zweiphasigen in Sternschaltung betriebenen Elektromotor nur ein Wicklungsteil einer Phase des Motors leitend überbrückt und vom übrigen Motor elektrisch getrennt werden, wohingegen bei drei- und mehrphasigen in Sternschaltung betriebenen Elektromotoren auch eine komplette Wicklung einer Phase überbrückt und abgeschaltet werden kann. Das Abschalten des Wicklungsteils ist erforderlich, um sicherzustellen, dass in dem überbrückten Wicklungsteil oder in der überbrückten Wicklung durch Selbstinduktion nicht eine Bremswirkung erzeugt wird.

Besonders vorteilhaft ist das erfindungsgemäße Verfahren zum Anfahren des Motors einsetzbar, da dieser dann mit einem erhöhten Moment anfährt und somit schneller seine Betriebsdrehzahl erreicht. Es versteht sich, dass beim leitenden Überbrücken einer Wicklung eines Dreiphasenmotors dieser dann wie ein Zweiphasenmotor anzusteuern ist und die leitend überbrückte Wicklung durch Öffnen des dieser vor- oder nachgeschalteten elektronischen Schalters, insbesondere Triacs, inaktiv zu schalten ist. Wenn der Motor als zweiphasiger Motor angesteuert wird, erfolgt vorteilhaft eine Ansteuerung, wie sie aus EP 1 443 635 A1 an sich bekannt ist.

Dabei kann das mit dem erfindungsgemäßen Verfahren erzielbare erhöhte Drehmoment zum Anfahren unter Last oder auch in anderen Betriebssituationen eingesetzt werden, in denen dieses benötigt wird. Insbesondere bei Verwendung in Verbindung mit einem elektronisch kommutierten Mehrphasengleichstrommotor wird das erfindungsgemäße Verfahren vorteilhaft in dem Drehzahlbereich eingesetzt, der zwischen 80 und 100 % der Synchrondrehzahl liegt. Solche Motoren insbesondere beim Einsatz zum Antrieb von Kreiselpumpen benötigen ein erhöhtes Moment um beispielsweise während des Anfahrens von einer Drehzahl, die 80 % der Synchrondrehzahl entspricht, auf die Synchrondrehzahl zu gelangen. Um in diesem Bereich ein ausreichendes Drehmoment sicherzustellen, werden üblicherweise die Motorwicklungen entsprechend groß dimensioniert, was jedoch häufig dazu führt, das beim Betrieb mit Synchrondrehzahl der Motor überdimensioniert ist und mittels einer Phasenanschnittsteuerung gedrosselt wird, was grundsätzlich nicht anzustreben ist. Beim Einsatz des erfindungsgemäßen Verfahrens hingegen kann der Motor in der Regel so dimensioniert werden, dass er einerseits seine Synchrondrehzahl vergleichsweise schnell erreicht, anderseits im Betrieb mit Synchrondrehzahl nicht oder nur minimal gedrosselt werden muss.

Gemäß einer vorteilhaften Weiterbildung des erfindungsgemäßen Verfahrens wird die Überbrückung und Trennung nach dem Anfahren des Motors aufgehoben, bei einem bürstenlosen Gleichstrommotor, also typischerweise bei Erreichen der Synchrondrehzahl oder ggf. auch einer unter- oder übersynchronen Drehzahl, wenn dies steuerungstechnisch so vorgesehen ist.

Wenn, was gemäß der Erfindung ebenfalls vorgesehen ist, nur ein Teil einer Wicklung leitend überbrückt und elektrisch vom übrigen Wicklungsteil getrennt wird, wie dies beispielsweise beim zweiphasigen Motor zur Durchführung des erfindungsgemäßen Verfahrens erfolgen muss, da eine ganze Wicklung nicht abgeschaltet werden darf, dann kann gemäß einer Weiterbildung der Erfindung eine leitende Überbrückung von Wicklungsteilen in allen Phasen vorgesehen werden, um auf diese Weise in allen verbleibenden Wicklungsteilen einen höheren Stromfluss und somit ein höheres Drehmoment des Motors zu realisieren.

Es können gemäß der Erfindung Wicklungsteile einer, mehrerer oder vorteilhaft aller Phasen leitend überbrückt werden. Bei mehr als zweiphasigen in Sternschaltung betriebenen Elektromotoren wird vorteilhaft eine gesamte Wicklung leitend überbrückt. Es versteht sich, dass jeweils der überbrückte oder die überbrückten Wicklungsteile elektrisch getrennt werden.

Das erfindungsgemäße Verfahren wird vorteilhaft mit elektronischen Schaltern in Form von Triacs durchgeführt, da diese kostengünstig verfügbar und für kleine und mittlere Leistungen bestimmt sind.

Vorteilhaft ist gemäß einer Weiterbildung des erfindungsgemäßen Verfahrens jede Wicklung und die mindestens eine elektrisch leitende Überbrückung mittels eines elektronischen Schalters, insbesondere eines Triacs zu- und abschaltbar, wobei nach dem Abschalten der Überbrückung die den Wicklungen zugeordneten elektronischen Schalter zur Drehzahlsteuerung oder Energieoptimierung des Motors angesteuert werden. Zur Durchführung des erfindungsgemäßen Verfahrens ist, wie oben erläutert, zumindest ein elektronischer Schalter zur Aktivierung der elektrisch leitenden Überbrückung erforderlich. Da der überbrückte Wicklungsteil oder die überbrückte Wicklung abzuschalten ist, ist darüber hinaus ein weiterer elektronischer Schalter mit dieser Wicklung in Reihe zu schalten. Diese Schalter sind also zur Durchführung des erfindungsgemäßen Verfahrens ohnehin zwingend erforderlich. Wenn Wicklungsteile aller Phase leitend überbrückt werden, wie dies nach einer Weiterbildung der Erfindung vorgesehen ist, sind notwendiger Weise auch allen Wicklungen elektronische Schalter vorzuschalten, weshalb diese dann im Betrieb, d. h. nach dem Hochfahren des Motors vorteilhaft eingesetzt werden, um den Motor energieoptimiert ansteuern zu können oder die Drehzahl des Motors gezielt ansteuern zu können, wie dies an sich bekannt ist. Eine solche Drehzahlsteuerung ist beispielsweise bei Asynchronmotoren möglich, eine Energieoptimierung insbesondere bei Synchronmotoren. Darüber hinaus ist bei bürstenlosen wechselstromnetzgespeisten Gleichstrommotoren ohnehin jeder Wicklung ein elektronischer Schalter vorzuschalten, um den Motor anfahren zu können. Auch bei Asynchronmotoren werden solche Schalter vorzugsweise jeder Wicklung vorgeschaltet, um eine Phasenanschnittssteuerung oder Energieoptimierung durchzuführen.

Besonders vorteilhaft wird das erfindungsgemäße Verfahren für einen bürstenlosen Dreiphasengleichstrommotor eingesetzt, der eine Kreiselpumpe antreibt oder für einen solchen Antrieb bestimmt und ausgelegt ist. Das damit verbundene erhöhte Anfahrmoment hat nicht nur Vorteile im Hinblick auf das frühere Erreichen der Synchron- oder Solldrehzahl, sondern darüber hinaus auch den Vorteil, dass, was bei Pumpen nicht völlig auszuschließen ist, ein fest sitzendes Laufrad, wie dies zum Beispiel durch Verschmutzungen auftreten kann, besser wieder frei gefahren werden kann, da ein erhöhtes Drehmoment zur Verfügung steht.

Der erfindungsgemäße Elektromotor zur Ausführung des vorbeschriebenen Verfahrens ist mindestes zweiphasig ausgebildet und weist Wicklungen auf, die in Sternschaltung geschaltet sind. Vorteilhaft ist jede Wicklung mittels eines elektronischen Schalters zu- oder abschaltbar, wobei mindestens ein weiterer elektronischer Schalter vorgesehen ist, mit dem eine Überbrückung mindestens eines Teils einer Wicklung aktivierbar oder deaktivierbar ist. Darüber hinaus weist der Elektromotor eine Steuerelektronik auf, welche das erfindungsgemäße Verfahren entsprechend ansteuert, d. h. die elektronischen Schalter, insbesondere Triacs entsprechend schaltet.

Die Erfindung ist nachfolgend anhand von in den Figuren dargestellten Ausführungsbeispielen näher erläutert. Es zeigen:
- Fig. 1: ein vereinfachtes Schaltbild eines dreiphasigen in Stern- schaltung betriebenen Elektromotors einer ersten Ausfüh- rungsform,
- Fig. 2: das vereinfachte Schaltbild des Motors gemäß Fig. 1 einer zweiten Ausführungsform,
- Fig. 3: das vereinfachte Schaltbild des Motors gemäß Fig. 1 einer dritten Ausführungsform,
- Fig. 4: das vereinfachte Schaltbild des Motors gemäß Fig. 1 einer vierten Ausführungsform,
- Fig. 5: ein vereinfachtes Schaltbild entsprechend Fig. 1 einer ers- ten Ausführungsform eines Zweiphasenmotors und

- Fig. 6: das Schaltbild gemäß Fig. 5 eines Zweiphasenmotors einer zweiten Ausführungsform.

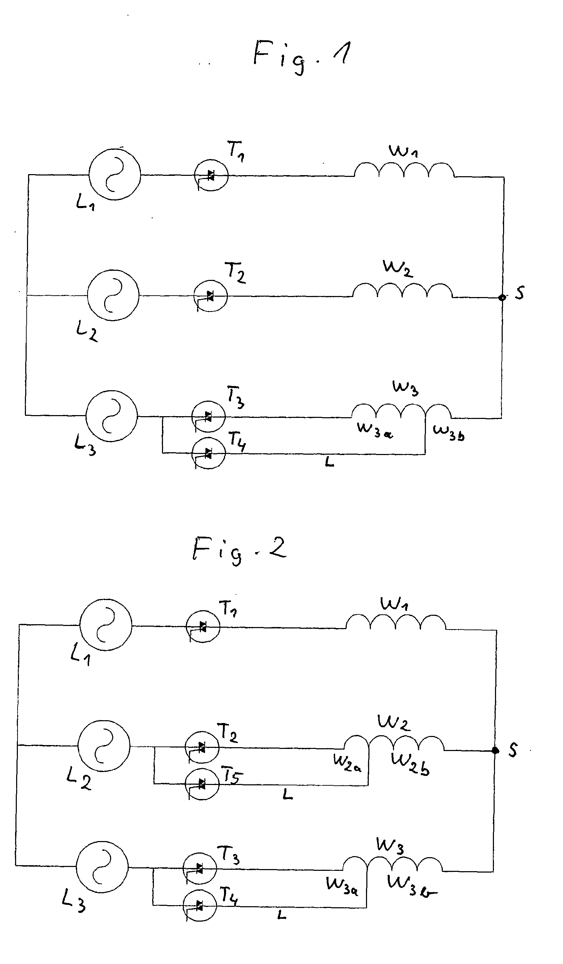

Der anhand von Fig. 1 vereinfacht dargestellte Elektromotor weist drei Wicklungen W₁, W₂ und W₃ auf, die in Sternschaltung geschaltet sind, also an einem Ende miteinander elektrisch leitend verbunden sind. Die Wicklungen sind über elektronische Schalter in Form von Triacs T₁, T₂ und T₃ mit den entsprechenden Anschlüssen L₁, L₂ und L₃ eines Drehstromversorgungsnetzes verbunden.

Die Wicklung W₃ ist geteilt ausgebildet und weist einen an den Schalter T₃ anschließenden Wicklungsteil W₃ₐ und einen an den Sternpunkt S anschließenden Wicklungsteil W_{3b} auf. Zwischen diesen Wicklungsteilen W₃ₐ und W_{3b} ist die Wicklung über einen Leiter L kontaktiert, der über ein Triac T₄ mit dem Anschluss L₃ des Versorgungsnetzes verbunden ist.

Zum Ansteuern des Motors mit erhöhtem Drehmoment wird der Schalter T₄ geschlossen, so dass der Wicklungsteil W₃ₐ der Wicklung W₃ leitend überbrückt wird, also in Bezug auf die Stromversorgung des Motors wirkungslos wird. Um zu verhindern, dass beim Laufen des Motors in den Wicklungsteil W₃ₐ ein Strom induziert wird und eine den Lauf nachteilig beeinträchtigende elektromagnetische Wirkung auftritt, wird der Schalter T₃ gleichzeitig geöffnet, wenn der Schalter T₄ schließt. Die am Anschluss L₃ anliegende Spannung liegt somit an der Teilwicklung W_{3b} an, wodurch sich der Widerstand der wirksamen Wicklung W₃ auf W_{3b} verkleinert und somit auch ein höherer Strom durch die Wicklungen W₁ und W₂ fließen kann, der ein erhöhtes Moment gegenüber dem Betrieb mit den Wicklungen W₁, W₂ und W₃ ermöglicht.

Bei der Ausführung nach Fig. 2 ist nicht nur die Wicklung W₃, sondern auch die Wicklung W₂ geteilt. Dort kann mittels des Schalters T₄ der Wicklungsteil W₃ₐ und mittels des Schalters T₅ der Wicklungsteil W₂ₐ überbrückt werden. Gleichzeitig kann mittels der Schalter T₂ und T₃ der jeweils überbrückte Wicklungsteil W₂ₐ bzw. W₃ₐ elektrisch von der Netzversorgung L₂ bzw. L₃ getrennt werden. Auch bei dieser Schaltung wird aufgrund des geringeren Widerstandes der verbleibenden elektrisch wirksamen Wicklungsteile W_{2b} und W_{3b} ein größerer Strom fließen und somit ein höheres Drehmoment erzeugt.

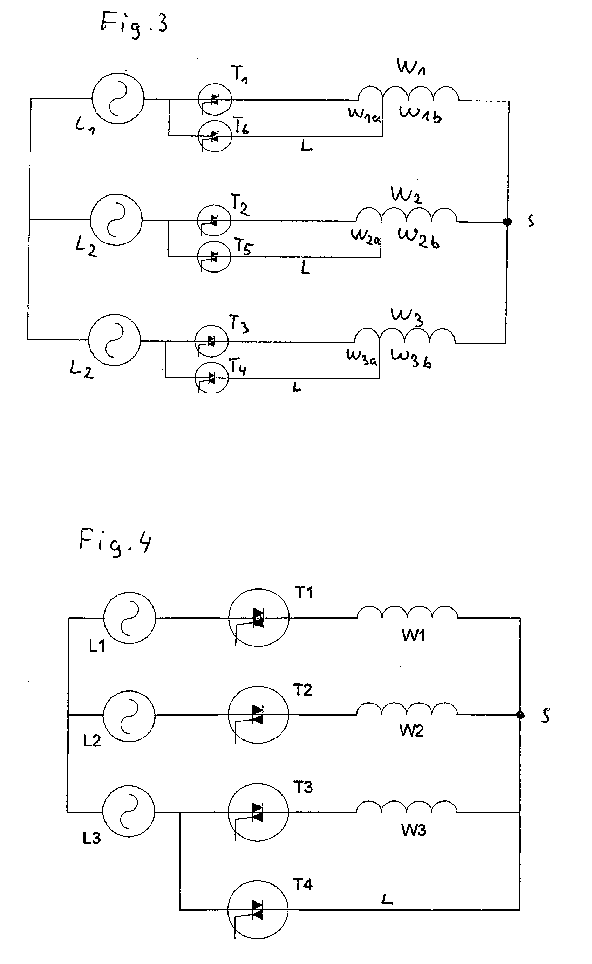

Bei der Ausführungsvariante gemäß Fig. 3 ist jede der Wicklungen W₁, W₂ und W₃ des dreiphasigen Motors geteilt ausgebildet, wobei die Wicklungsteile W₁ₐ, W₂ₐ und W₃ₐ mittels der Schalter T₆, T₅ und T₄ jeweils überbrückbar sind und mittels der den Wicklungen vorgeschalteten Schaltern T₁, T₂ und T₃ elektrisch von den überbrückten Wicklungsteilen W₁ₐ, W₂ₐ und W₃ₐ getrennt werden. Es weisen dann alle drei Wicklungen W_{1b}, W_{2b} und W_{3b} einen geringeren Widerstand auf, wodurch in allen drei Wicklungen ein höherer Strom fließt, der ein erhöhtes Drehmoment des Motors bewirkt.

Bei dem Ausführungsbeispiel gemäß Fig. 4, das ebenfalls einen dreiphasigen bürstenlosen Elektromotor in Sternschaltung zeigt, sind die drei Wicklungen W₁, W₂ und W₃ nicht geteilt ausgebildet, es ist jedoch die Wicklung W₃ mittels des Leiters L vollständig überbrückbar. Hierzu ist ein Triac T₄ im Leiter L vorgesehen, der diesen bei geschlossenem Schalter parallel zur Wicklung W₃ schaltet. Ein Schalter T₃, welcher der Wicklung W₃ vorgeschaltet ist, dient dann zum Trennen der Wicklung W₃ vom Netzanschluss L₃, wenn diese durch den Leiter L überbrückt ist. Bei dem Ausführungsbeispiel gemäß Fig. 4 muss der Motor dann, wenn der Leiter L bei geschlossenem Schalter T₄ die Wicklung W₃ überbrückt wie ein zweiphasiger Motor angesteuert werden, da die Wicklung W₃ wirkungslos geschaltet ist. Auch bei dieser Schaltung fährt der Motor mit einem erhöhten Moment gegenüber dem Normalbetrieb, bei welchem der Schalter T₄ geöffnet und die Wicklungen W₁, W₂ und W₃ je nach konstruktivem Aufbau und Betriebsart des Motors mit den Netzanschlüssen L₁, L₂ und L₃ verbunden sind.

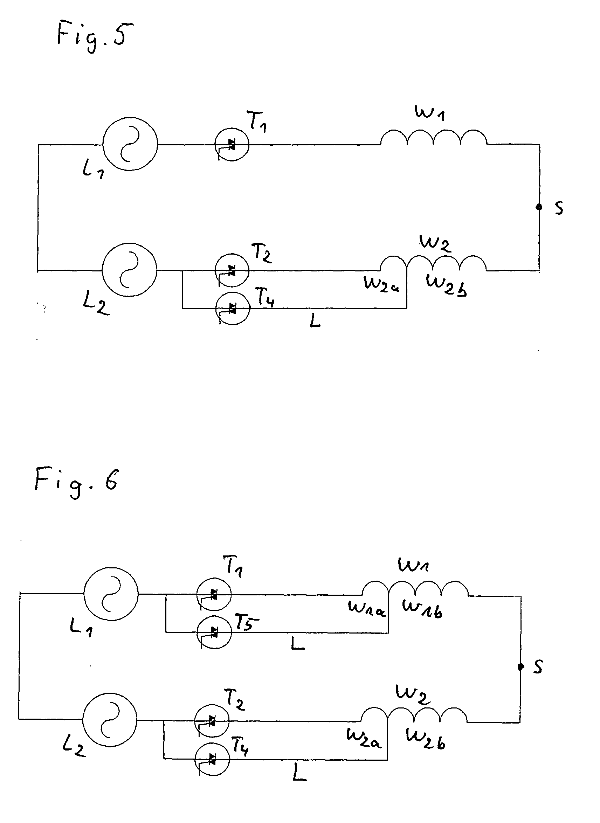

Anhand von Fig. 5 ist dargestellt, wie das Verfahren bei einem zweiphasigen Motor anwendbar ist. Der Motor weist die Wicklungen W₁ und W₂ auf, die an einer Seite im Punkt S verbunden sind und mit ihrer anderen Seite am Versorgungsnetz mit den Phasen L₁ und L₂ über Schalter T₁ und T₂ getrennt anliegen. Die Wicklung W₂ ist in zwei Wicklungsteile W₂ₐ und W_{2b} aufgeteilt, wobei im Bereich der Teilung ein Leiter L herausgeführt ist, der über einen Schalter T₄ den Wicklungsteil W₂ₐ leitend überbrückt, so dass die Versorgungsspannung des Anschlusses L₂ direkt am Wicklungsteil W_{2b} ansteht. Der der Wicklung W₂ vorgeschaltete Schalter T₂ wird wie vorbeschrieben geöffnet, um sicherzustellen, dass beim Anfahren des Motors in dem verbleibenden wirkungslos geschalteten Wicklungsteil W₂ₐ kein Strom induziert wird.

Anhand von Fig. 6 ist eine alternative Beschaltung eines zweiphasigen Motors dargestellt, bei dem beide Wicklungen W₁ und W₂ geteilt ausgeführt sind und jeder dieser Teilwicklungen W₁ₐ und W₂ₐ mittels eines Leiters L durch Schließen eines Schalters T₅ bzw. T₄ leitend überbrückt werden kann. Der der Wicklung W₁ bzw. W₂ vorgeschaltete Schalter T₁ bzw. T₂ wird dann geöffnet. Die an den Phasenanschlüssen L₁ und L₂ anliegende Spannung liegt dann direkt an den Teilwicklungen W_{1b} und W_{2b} an, wodurch diese mit einer höheren Spannung beaufschlagt werden und somit der Motor ein höheres Drehmoment erzeugt.

Die vorbeschriebenen Schaltungsvarianten können für einen bürstenlosen elektronisch kommutierten Gleichstrommotor oder auch einen Asynchronmotor eingesetzt werden. Bei einem bürstenlosen Motor werden die Schalter T₁, T₂ und T₃ zum Anfahren sowie vorteilhaft zur Energieoptimierung eingesetzt, sie können jedoch auch zur Drehzahlsteuerung genutzt werden. Beim Asynchronmotor werden die Schalter T₁ bis T₃ vorteilhaft zur Drehzahlsteuerung und/oder Energieoptimierung eingesetzt. Zur Durchführung des erfindungsgemäßen Verfahrens sind jeweils nur die beiden Schalter erforderlich, welche einen Wicklungsteil leitend überbrücken und diesen überbrückten Wicklungsteil elektrisch vom Versorgungsnetz trennen, also bei der Ausführung gemäß Fig. 1 beispielsweise die Schalter T₃ und T₄, bei der Ausführung gemäß Fig. 2 die Schalter T₂ bis T₅, bei der Ausführung gemäß Fig. 3 die Schalter T₁ bis T₆ und bei der Ausführung gemäß Fig. 4 die Schalter T₃ und T₄.

### Bezugszeichenliste

- L₁, L₂, L₃ -: Phasen des Versorgungsnetzes
- T₁, T₂, T₃, T₄, T₅, T₆ -: elektronische Schalter in Form von Triacs
- W₁, W₂, W₃ -: Wicklungen des Motors
- W₁ₐ, W₂ₐ, W₃ₐ -: leitend überbrückbare Teilwicklungen
- W_{1b}, W_{2b}, W_{3b} -: Teilwicklungen
- S -: Sternpunkt
- L -: Leiter

## Patentansprüche

1. Verfahren zum Ansteuern eines mehrphasigen in Sternschaltung betriebenen Elektromotors, bei dem mindestens ein Wicklungsteil einer Phase des Motors leitend überbrückt und der überbrückte Wicklungsteil elektrisch getrennt wird.

2. Verfahren nach Anspruch 1, das zum Anfahren des Motors eingesetzt wird.

3. Verfahren nach Anspruch 1 oder 2, bei dem nach dem Anfahren des Motors die Überbrückung und Trennung aufgehoben wird.

4. Verfahren nach einem der vorhergehenden Ansprüche, bei dem Wicklungsteile von mehreren Phasen des Motors leitend überbrückt werden.

5. Verfahren nach einem der vorhergehenden Ansprüche, bei dem Wicklungsteile aller Phasen leitend überbrückt werden.

6. Verfahren nach einem der vorhergehenden Ansprüche, bei dem die gesamte Wicklung einer Phase leitend überbrückt wird.

7. Verfahren nach einem der vorhergehenden Ansprüche, das mittels elektronischer Schalter, vorzugsweise Triacs durchgeführt wird.

8. Verfahren nach einem der vorhergehenden Ansprüche, bei dem jede Wicklung und die mindestens eine elektrische Überbrückung mittels eines elektronischen Schalters, insbesondere eines Triacs zu-und abschaltbar ist, und bei dem nach dem Abschalten der Überbrückung die den Wicklungen zugeordneten elektronischen Schalter zur Drehzahlsteuerung oder Energieoptimierung des Motors angesteuert werden.

9. Verfahren nach einem der vorhergehenden Ansprüche, dass für einen bürstenlosen Dreiphasengleichstrommotor eingesetzt wird, der eine Kreiselpumpe antreibt oder für einen solchen Antrieb bestimmt und ausgelegt ist.

10. Elektromotor mit einer Ansteuerung nach einem der vorhergehenden Ansprüche, der mindestens zweiphasig ausgebildet ist und dessen Wicklungen in Sternschaltung geschaltet sind, wobei jede Wicklung (W₁, W₂, W₃) mittels eines elektronischen Schalters (T₁, T₂, T₃) zu- oder abschaltbar ist und mindestens ein weiterer elektronischer Schalter (T₄, T₅, T₆) vorgesehen ist, mit dem eine Überbrückung mindestens eines Teils einer Wicklung (W₁ₐ, W₂ₐ, W₃ₐ) aktivierbar oder deaktivierbar ist.
